# EUROPEAN PATENT SPECIFICATION

(11) **EP 1 439 353 B1**
(45) Date of publication and mention of the grant of the patent: **13.06.2012**
(21) Application number: 04250165.0
(22) Date of filing: 14.01.2004
(51) Int. Cl.: F24F 9/00, F25D 23/02

(54) **Conditioned vestibule for a cold storage doorway**
Klimatisierte Schleuse für den Zugang eines Kühlhauses
Sas climatisé pour le passage dans un entrepôt frigorifique

(30) Priority: 14.01.2003 GB 0300729
(43) Date of publication of application: 21.07.2004
(60) Divisional application: 11003450.1
(73) Proprietor: Clark Door Limited, Carlisle, CA2 5RR (GB)
(72) Inventor: Smith, Peter R., Lewistown, Montana 59457 (US); Johnstone, Colin, Douglas, Dumfries and Galloway DG12 5EZ (GB); Ashley, Paul, Carlisle CA4 8BX (GB)
(74) Representative: Teasdale, Nicola Joanne

(56) References cited:
- FR-A- 2 799 539
- US-A- 4 074 620
- US-A- 4 304 174
- US-A- 4 516 482
- US-A1- 2002 160 331

## Description

The present invention relates to a conditioned vestibule for a cold storage doorway.

Frozen and refrigerated goods are normally stored in refrigerated storage rooms or "cold storage" prior to being delivered to a retailer or end user. Frequent access to these cold stores is made via doors into the stores to both deliver and remove products therefrom. Access may be for personnel only but, more often, is for loading vehicles, such as fork lift trucks, that are able to deliver and remove products in bulk from the cold store. '

The use of heavily insulated solid panel cold store doors with heated perimeter seals has generally been found to be the most effective solution to maintain the integrity of a cold room envelope. However, a problem with this type of door is that damage to the door caused by collisions between fork lift truck traffic and the door is virtually unavoidable, even with high speed bi-parting doors. Cold store operators have recognised this problem and have tried to overcome it by adopting alternative door types, such as fabric roll-up doors. This has met with limited success since the doors inevitably open more slowly than equivalent sized bi-parting horizontal sliding doors. If the door is left open, an inflow of relatively warm air is able to enter the cold store and cold air flows out of the store. This is clearly undesirable since it allows ice crystals to form in the store and moisture droplets to form in the relatively warm side and also contributes significantly to the load on the refrigeration plant. Furthermore, ice can form on the floor around the doorway which is a safety concern.

US Patent No. 4516482 (George Smith) relates to a conditioned air vestibule for a refrigerated warehouse doorway. Spaced inner and outer moveable doors are provided in a portal extending across the doorway to define a closed entrance vestibule and conditioned air is circulated through the vestibule. Heated air is directed downwardly from adjacent the top of the doorway through the vestibule along substantially its full width and adjacent the inner cold side door and air is withdrawn from the vestibule at the top of the doorway adjacent the outer warm side of the door.

The aforementioned arrangement has proved successful in that the heated air flowing over the door prevents formulation of frost on the cold side door and condensation or moisture on the warm side door to maintain any see-through surfaces in a clear condition. Furthermore, the temperature in the vestibule is maintained at a level such that any infiltration air does not pass through the saturation level when entering the cold storage room and therefore does not produce precipitation. Similarly, any exfiltration air escaping the vestibule and mixing with the warm outside air does not produce fog. However, this arrangement does not take account of the change in air flow that occurs when the doors are opened and closed.

It is an object of the present invention to provide an improved conditioned vestibule for a cold storage doorway that aims to overcome, or at least alleviate, the abovementioned drawbacks.

Accordingly, the present invention provides a vestibule (2) for a cold storage doorway, the vestibule defining a doorway opening (22) and comprising a frame (4, 6, 8) for supporting inner and outer moveable door-forming members (10, 12), means (20) for circulating air between said inner and outer moveable door-forming members and means (20) for varying the air flow between said members, wherein the means (20) for varying the air flow between said members comprises (i) a variable speed fan for circulating air between said door forming members (10), (12) or (ii) a fan kept at a constant speed and a mechanical damper to vary the airflow, characterised in that the means for varying the airflow, between said members increases the air flow automatically upon opening of the door-forming members (10), (12) and automatically decreases the airflow, upon closing of the door-forming members (10), (12).

According to the invention, a fan is provided for circulating air between the door-forming members. Preferably, the fan is also able to vary the flow of air between said members, for example by means of a variable speed fan. Alternatively, the fan may be kept at a constant speed and a mechanical damper may be provided to control the volume of airflow. A heater may also be provided for assisting in circulation of the air and/or controlling the temperature within the vestibule.

According to the invention, speed of the fan increases automatically upon opening of the door-forming members and automatically decreases upon closing of the door-forming members. This helps to reduce the interchange of air from one side of the vestibule to the other when the doors are in their open position by effectively providing an air curtain across the door. The speed of the fan may increase by 50% to 500% or 50%-150% upon opening of the door-forming members. However, the exact speeds of the fan will depend upon the door size and site characteristics.

It is preferable to provide actuation means to impart movement to the door-forming members. Preferably, the door-forming members are in the form of strip curtains extending from the top of the vestibule. Preferably, the curtains are transparent, for example being made from polyvinylchloride (PVC). More preferably, the strips are suspended on a motorised concertina mechanism. Alternatively, other types of door-forming members may be provided, such as single slide doors, single concertina doors, bi-parting slide doors, single or bi-parting horizontally rolling doors, single or bi-parting folding doors or hingedly mounted doors.

The frame preferably comprises two substantially parallel side panels or members connected by means of a horizontal top panel or member. The inner and outer door-forming members are preferably separated by a gap in the range of 250-2500mm, more preferably 500-1000mm, especially 750mm.

Preferably, air discharge means are provided for receiving air from the fan and discharging it across the doorway and air receiving means are provided for receiving the discharged air. Means may also be provided for conducting air from the air receiving means to the air discharge means to recirculate the air through the vestibule. The air receiving and air conducting means may comprise air return means.

Air flow from the heater and fan is preferably directed downwardly from the top panel of the frame. In this embodiment, the air discharge means is situated in the top member or panel of the frame and the air return means comprises an inlet provided proximate a base of one or both side panels or members.

Alternatively, the air flow may be directed horizontally between said side panels. In this embodiment, air discharge means is provided in a first side panel or member and the air return means is provided in the opposing side panel or member. Preferably, a deflector is also provided for directing the flow of air from the air discharge means. The deflector may comprise at least one blade, preferably a pair of blades, running generally lengthwise along the first side member wherein the blades direct air discharged from an opening provided in the first side member, preferably being positioned between the blades, across the doorway opening to an inlet provided in the opposing side member.

The deflector may direct air in a single direction, for example straight across the doorway opening, or in a number of directions depending upon the position of the blade with respect to the side member. For example, the deflector may be configured such as deflect air towards the regions of greatest air flow through the vestibule.

The blades may be positioned in a first orientation when the door-forming members are closed and adjust to a second orientation, preferably automatically, when the door-forming members are open.

Alternatively, the air discharge means may be such as to change the direction of air flow based upon whether the door-forming members are in the open or closed position.

The vestibule may further include a dehumidifier unit to control the moisture content between the door-forming members. An additional security door may also be provided for sealing the vestibule, for example being of a rolling-type. Preferably, this door provides insulation.

For a better understanding of the present invention and to show more clearly how it may be carried into effect, reference will now be made by way of example only to the accompanying drawings in which:
Figure 1 is a schematic diagram of a conditioned vestibule for a coldstore doorway according to one embodiment of the present invention, with the door in the closed position;
Figure 2 is a schematic diagram of the conditioned vestibule for a coldstore doorway of Figure 1, shown with the door in the open position;
Figure 3 is an elevation view of the conditioned vestibule shown in Figures 1 , and 2 with the doors in the closed position;
Figure 4 is a cross-section of the conditioned vestibule shown in Figure 3, with the doors in the open position;
Figure 5 is another embodiment of a frame for a conditioned vestibule, with the door-forming members removed, illustrating horizontal air movement across the doorway opening;
Figure 6 illustrates a side panel or member used in connection with an embodiment of the vestibule that discharges air generally horizontally across the doorway opening to counter two-way airflow;
Figure 7 shows a front view of one embodiment of the side panel with the longitudinal air discharge means shown in Figure 6;
Figure 8 is a cross-section of the side panel taken near to the top of the panel;
Figure 9 is a cross-section of the side panel taken near the middle of the panel, where the air is deflected substantially straight across the doorway opening; and
Figure 10 shows a cross-section of the side panel taken near the base of the side panel.

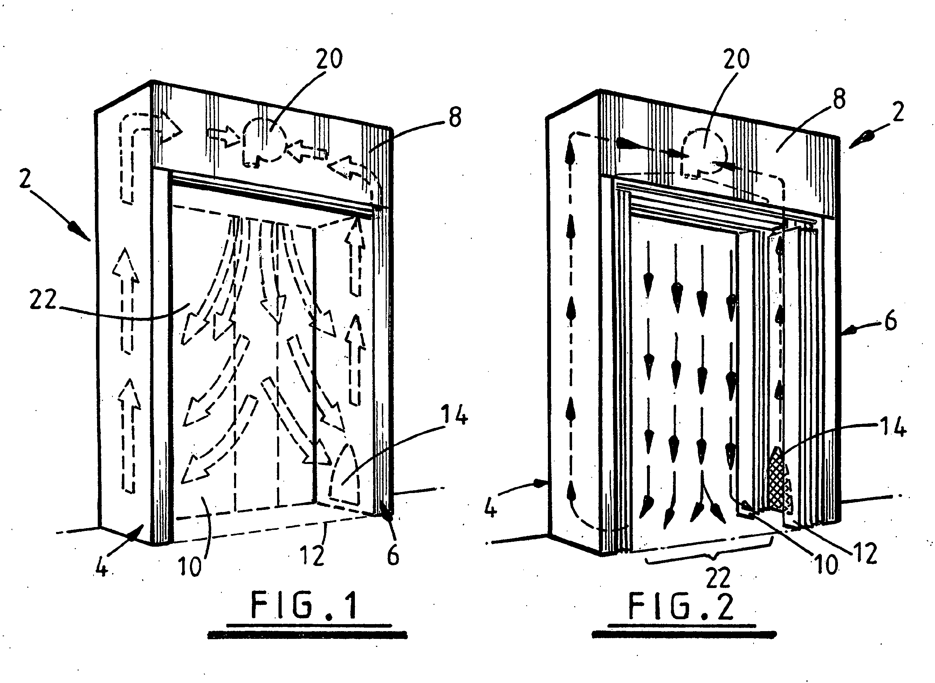

Referring to Figures 1 to 4 of the accompanying drawings, a conditioned vestibule 2 for a coldstore doorway according to one embodiment of the present invention is illustrated. The vestibule 2 defines a doorway opening 22 between two rooms of a building having different temperatures, such as a warm room W adjacent a cold storage room C. The vestibule comprises a frame having parallel side panels or members 4, 6 and a horizontal top panel or member 8 connecting the side panels. In one embodiment, the top panel 8 is a hollow duct formed from sheet metal or other suitable material and houses the fan and heater assembly 20, described herein and the side panels 4, 6 are ducts that control airflow across the doorway opening 22.

Two sets of door-forming members 10, 12 (also herein referred to as "doors") connect to the top panel 8 and are shown in the closed position in Figure 1. In this embodiment, transparent PVC strip curtains 10,12 are suspended from the top panel, one set being positioned towards the rear of the vestibule and the other being positioned towards the front thereof to provide a gap of approximately 750mm between the sets of curtains. The strips are suspended on a motorised concertina mechanism (not shown) that is able to move the doors to the fully open position when activated.

It is to be appreciated that the mechanism for operation of the door is not limited to a concertina mechanism, albeit this is preferred. The doors may be single slide doors, single concertina doors, bi-parting slide doors, single or bi-parting horizontally rolling doors, single or bi-parting folding doors, hingedly mounted doors or any combination or derivative of these. In one embodiment, actuation means are provided to impart movement to the door-forming members.

Additionally, the vestibule is provided with a variable speed fan and heater assembly 20. The assembly includes a variable speed fan (not shown) and a heater (not shown). In the embodiment shown, this feature forms an important part of the present invention since it enables a controlled temperature to be maintained within the vestibule by the heater when the doors are in the closed position (see Figure 1) but automatically increases the volume of airflow upon opening of the doors (see Figure 2) so as to provide a curtain of air across the opening of the door to reduce the inflow of warm air to the cold side and the outflow of cold air from the cold side. In the embodiment shown, the air is directed down from the top of the panel and enters the frame through inlets 14 provided towards the base of the side panels and passes back to the top panel where it is re-circulated. Upon closure of the doors the speed fan automatically switches back to its slower mode to circulate the reduced volume of air flow through the vestibule at a controlled temperature. This maintains a frost-free environment within the vestibule to ensure there is no ice or moisture build-up on the doorway floor or doors. Furthermore, in the case of clear PVC strips being used as the door-forming members, this ensures clear vision through the doorway at all times because ice and moisture are not permitted to accumulate on the strips.

In an example where fan motor speed is changed based on the position of the door, the detection of the opening and/or closing of the doors to automatically switch the speed of the fan is achieved by any suitable means, such as an inductive proximity switch to detect that the door is not fully closed and from this increase the speed of the fan. Alternatively, any type of limit switch may be used or a controller device which provides a signal derived from pulses produced by a rotary encoder device fitted internally to the door drive motor.

In the embodiment shown, the fan and heater are positioned together in an assembly 20 but in other embodiments, the fan and heater may be separated. According to the invention, the volume of air exiting the fan increases automatically upon opening of the door-forming members 10, 12 and automatically decreases upon closing of the door-forming members. The air volume may be controlled in various ways, such as increasing the speed of the fan motor itself (i.e. increasing the revolutions per minute (rpm) of the fan) or by maintaining the fan motor at a constant speed and using a mechanical damper to control the volume of airflow. Changing the volume of airflow upon opening of the doors 10, 12 helps to reduce the interchange of air from one side of the vestibule 2 to the other when the doors are in their open position by effectively providing an air curtain across the doorway opening.

In one embodiment, the volume of airflow from the fan increases by 50-500%. In another embodiment, the airflow increases in the range of 50-150% upon opening of the door-forming members. The exact speeds of the fan and the volume of airflow will depend upon the vestibule's size and site characteristics. In yet a further embodiment, the airflow does not change upon opening or closing of the doors.

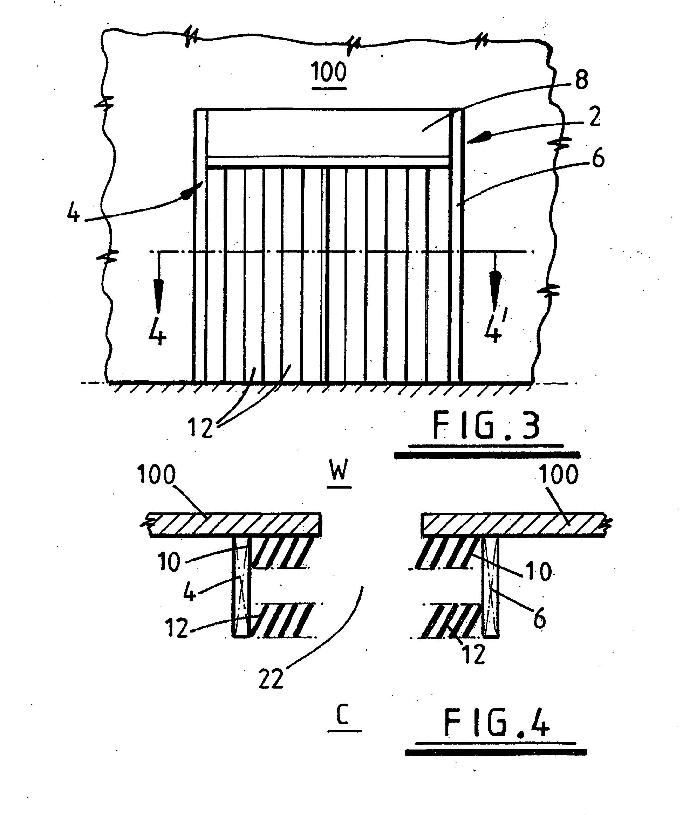

Figure 3 is an elevation view of the conditioned vestibule 2 shown in Figures 1 and 2 with the doors 10, 12 in a closed position. Only one door 12 is shown in Figure 3, because the second door (10 in Figures 1 and 2) is obscured from view by the first door 12. As illustrated in Figure 3, the strips form doors 10, 12 that trap the circulated air therebetween, when the doors 10, 12 are closed. The vestibule 2 is positioned in an opening (22 in Figures 1 and 2) in a wall that separates a cold storage room from another room.

Figure 4 is a cross-section of the conditioned vestibule 2 shown in Figure 3, with the doors 10, 12 in the open position. The doors 10, 12 are formed from PVC strips that part in the middle of the doorway and retract into opposing side members 4, 6 of the frame when the doors 10, 12 are open. In one embodiment, the doors 10, 12 are spaced approximately 250-2500 millimeters apart when the doors 10, 12 are in the closed position. In another embodiment, the doors 10, 12 are spaced approximately 500-1000 millimeters apart from each other in one embodiment. In still another embodiment, the doors 10, 12 are spaced approximately 750 millimeters apart.

The vestibule may also be provided with a dehumidifier unit (not shown) that assists in the control of the moisture content within the vestibule. Furthermore, an insulated doorway may also be provided within the doorway, such as a rolling type door, to provide a secured doorway. The rolling type door would be lowered from the top panel of the frame to securely close the door when frequent access to the store is not required. An additional security door (not shown) may also be provided for sealing the vestibule 2, for example, being of a rolling type. In one embodiment, the security door provides insulation.

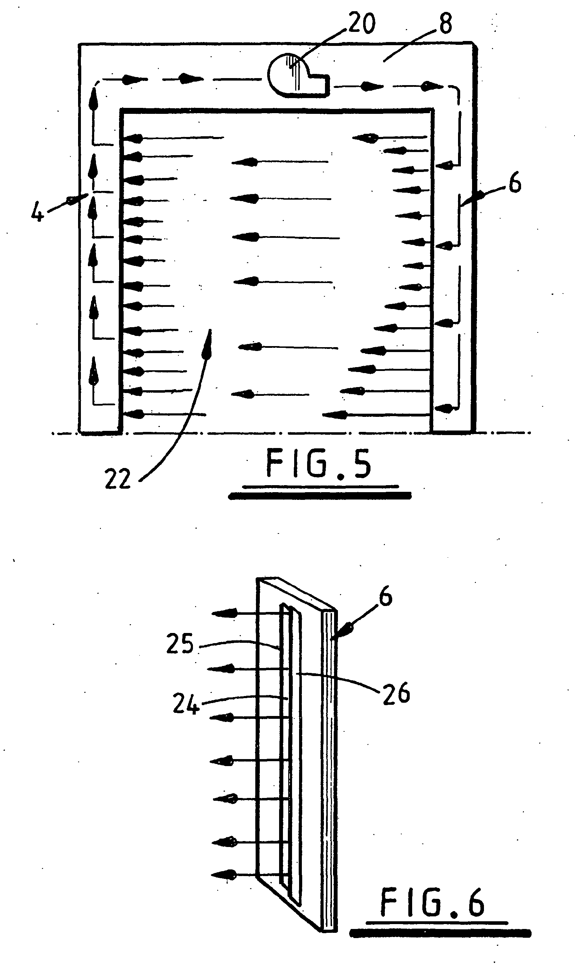

The embodiment of the present invention illustrated in Figures 1 to 4 causes airflow in a vertical direction from the top of the doorway towards the base of the doorway. However, the airflow may be directed horizontally between the side panels or members. Figure 5 is another embodiment of a frame with the door-forming members 10, 12 removed, illustrating such horizontal air movement across the opening. In the embodiment of Figure 5, the air is forced across the opening horizontally. Air exits a first manifold on the right side of the example diagram of Figure 5, which serves as an air discharge means. Air enters a second manifold, which serves as an air inlet means. In this example, the manifolds extend along the lengths of the side panels or members 4, 6 of the frame. The length of the arrows shown across the opening in Figure 5 reflects the relative air momentum at different points. As shown, the air momentum is greater at the upper and lower ends of the air discharge means.

In one embodiment, the air discharge means (24 in Figure 6) includes blades (25, 26 in Figure 6) that deflect the air at varying angles relative to the first side panel or member (e.g., 4) to counter two-way airflow (that is, airflow seeking to both enter and exit the cold storage room). Near the top of the air discharge means, the blades 25, 26 are positioned to deflect air toward the warmer side W of the vestibule (away from the cold storage room C) to counter relatively warmer air seeking to infiltrate the cold storage room. Near the bottom of the air discharge means 24, the blades 25, 26 are positioned to deflect air toward the colder side of the vestibule (toward the cold storage room) to counter relatively colder air seeking to exfiltrate the cold storage room C. For example, the air may be circulated across the vestibule as described in U.S. Patent No. 4,516,482 to George R. Smith, entitled "Conditioned Air Vestibule for Refrigerated Warehouse Doorway," which is hereby incorporated by reference. Alternatively, the air may be circulated across the vestibule 2 using one or more of the horizontal air curtains described in U.S. Patent No. 6,106,387 to George R. Smith, entitled "Conditioned and Controlled Air Vestibule for Refrigerated Warehouse," which is hereby incorporated by reference.

In another embodiment, the blades 25, 26 deflect air in a single direction, toward or away from the cold storage room to counter one-way airflow, for example, created by exhaust fans in the building. In an alternative embodiment, the blades 25, 26 deflect the air straight across the doorway opening 22. In still another embodiment, the blades 25, 26 are flexible insofar as they may be turned to change their orientation. In this example the flexible blades 25, 26 may be manufactured in a generally straight position and then adjusted on-site to counter opposing air flow. The orientation of the flexible blades 25, 26 may be controlled dynamically, after installation of the vestibule 2. For example, the orientation of the blades 25, 26 may be controlled electronically.

In still another embodiment, the orientation of the blades 25, 26 changes based on the door position. When the doors 10, 12 are closed, the blades 25, 26 direct air generally straight across the doorway opening 22. When the doors 10, 12 open, the blades 25, 26 automatically adjust their orientation from a first, static position to a second position that counters the air flow (e.g., toward the cold storage area C at the bottom of the vestibule and away from the cold storage area near the top of the vestibule, to counter two-way airflow). When used in connection with PVC strips as the doors 10, 12, this helps to maintain the strips together when the doors 10, 12 are closed because the airflow is redirected straight across the doorway opening 22 (and not toward the strips) when the doors 10, 12 are closed. In another embodiment, the gap between the blades 25, 26 is adjustable and may widen or narrow based upon the position of the doors 10, 12.

Figure 6 shows an example side panel or member 6 used in connection with an embodiment of the vestibule 2 that discharges air generally horizontally across the doorway opening (22 in Figure 1). The example side panel or member 6 in Figure 6 includes an air discharge means 24 formed by two blades 25, 26 that run generally along the length of the side panel or member 6 from top to bottom. The arrows exiting the air discharge means 24 show the flow of air out of the air discharge means 24. In this embodiment, the air discharge means 24 directs the air generally horizontally across the doorway opening (22 in Figure 1). In this embodiment, the discharged air is returned to the fan and heater assembly (20 in Figure 1) via an air return means (not shown) in the opposing side member (4 in Figure 1). In one example, the air return means (not shown) is an elongated inlet hole that runs along substantially the entire length of the opposing side member (4 in Figure 1). In one embodiment, the air discharge means vary the momentum of the discharged air along the length of the side member 6. For example, more air may be discharged faster near the top and bottom of the side member 6 than at the middle. In this example, the air return means may be shaped accordingly to accept a greater volume of returned air near the top and bottom of the opposing side member 4. In another embodiment, no blades 25, 26 are used as part of the air discharge means and instead air is discharged through an opening or nozzle without directional blades 25, 26.

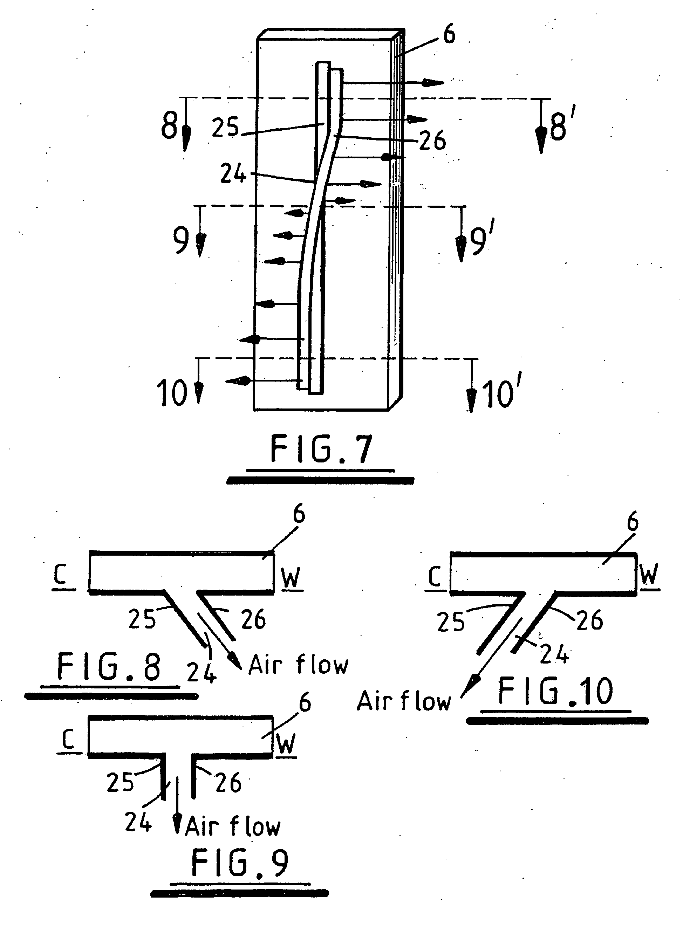

Figure 7 shows a front view of one embodiment of the side member or panel 6 with the longitudinal air discharge means 24 shown in Figure 6. In Figure 7, the blades 25, 26 of the air discharge means 24 change orientation along the length of the side member 6. Near the top of the side member 6, the blades 25, 26 deflect the air toward the warm area W (toward the right of this diagram) to counter relatively warmer air seeking to infiltrate the cold storage room C near the top of the side member 6. Near the bottom, or base, of the side member 6, the blades 25, 26 deflect the discharged air toward the cold storage area to counter relatively cooler air seeking to exfiltrate the cold storage area near the bottom of the side member 6.

Figures 8, 9, and 10 of the accompanying drawings show cross-sections of the side member or panel 6 shown in Figure 7, taken along the lines 8-8', 9-9', and 10-10', respectively. Figure 8 is a cross-section of the side member 6 taken near the top of the side member 6. The blades 25, 26 of the air discharge means 24 deflect the air toward the warm area to counter relatively warmer air seeking to infiltrate the cold storage room near the top of the side member 6. Figure 9 is a cross-section of the side member 6 taken near the middle of the side member 6, where the air is deflected substantially straight across the doorway opening (22 in Figure 1). Figure 10 shows a cross-section of the side member 6 taken near the base of the side member 6. Near the base of the side member 6, the blades 25, 26 deflect the air toward the cold storage room to counter relatively cold air seeking to exfiltrate the cold storage room.

## Claims

1. A vestibule (2) for a cold storage doorway, the vestibule defining a doorway opening (22) and comprising a frame (4, 6, 8) for supporting inner and outer moveable door-forming members (10, 12), means (20) for circulating air between said inner and outer moveable door-forming members and means (20) for varying the air flow between said members, wherein the means (20) for varying the air flow between said members comprises (i) a variable speed fan for circulating air between said door forming members (10), (12) or (ii) a fan kept at a constant speed and a mechanical damper to vary the airflow, **characterised in that** the means for varying the airflow, between said members increases the air flow automatically upon opening of the door-forming members (10), (12) and automatically decreases the airflow, upon closing of the door-forming members (10), (12).

2. A vestibule as claimed in claim 1 further comprising a heater.

3. A vestibule as claimed in claim 1 wherein the speed of the fan (20) increases by 50% to 500% upon opening of the door-forming members.

4. A vestibule as claimed in claim 1 wherein the speed of the fan (20) increases by 50% to 150% upon opening of the door-forming members.

5. A vestibule as claimed in any one of the preceding claims wherein actuation means is provided to impart movement to the door-forming members.

6. A vestibule as claimed in any one of the preceding claims wherein the door-forming members (10, 12) are in the form of strip curtains.

7. A vestibule as claimed in claim 6 wherein the strips are suspended on a motorised concertina mechanism.

8. A vestibule as claimed in any one of the preceding claims wherein the door-forming members (10, 12) are selected from the group consisting of single slide doors, single concertina doors, bi-parting slide doors, single horizontally rolling doors, bi-parting horizontally rolling doors, single folding doors, bi-parting folding doors and hingedly mounted doors.

9. A vestibule as claimed in any one of the preceding claims wherein the frame comprises two substantially parallel side panels (4, 6) connected by means of a horizontal top panel (8).

10. A vestibule as claimed in any one of the preceding claims wherein inner and outer door-forming members are separated by a gap of between 250-2500mm.

11. A vestibule as claimed in claim 10 wherein the inner and outer door-forming members are separated by a gap of 750mm.

12. A vestibule as claimed in any one of claims 1 to 11 wherein in air discharge means (24) is provided for receiving air from the fan (20) and discharging it across the doorway and air receiving means is provided for receiving the discharged air.

13. A vestibule as claimed in claim 12 wherein air conducting means is provided for conducting air from the air receiving means to the air discharge means.

14. A vestibule as claimed in claim 13 wherein the air receiving means and air conducting means comprise air return means.

15. A vestibule as claimed in claim 14 when dependent from claim 9 wherein air flow is directed downwardly from the air discharge means provided in the top panel (8) to air return means comprising an inlet (14) provided proximate a base of one or both of the side panels (4, 6).

16. A vestibule as claimed in claim 14 when dependent from claim 9 wherein air flow is directed horizontally between the side panels (4,6), the air discharge means (24) being provided in a first side panel (6) and air return means being provided in the opposing side panel.

17. A vestibule as claimed in claim 16 wherein a deflector (25, 26) is provided for directing the flow of air from the air discharge means (24).

18. A vestibule as claimed in claim 17 wherein the deflector comprises at least one blade (25, 26) running generally lengthwise along the first side panel (6) for directing air discharged from an opening (24) in said panel to an inlet provided in the opposing side panel.

19. A vestibule as claimed in claim 18 wherein the at least one blade (25, 26) directs air in a single direction.

20. A vestibule as claimed in claim 18 wherein the at least one blade (25, 26) directs air in a number of different directions, being dependent upon the position of the blade with respect to the side member (6).

21. A vestibule as claimed in any one of claims 17 to 20 wherein the deflector may be positioned in a first orientation when the door-forming members (10, 12) are closed and adjusts to a second orientation when the door-forming members are open.

22. A vestibule as claimed in any one of claims 12 to 16 wherein the air discharge means can change the direction of air flow based upon whether or not the door-forming members are in the open or closed position.

23. A vestibule as claimed in any one of the preceding claims further comprising a dehumidifier unit.

24. A vestibule as claimed in any one of the preceding claims further comprising an additional security door for sealing the vestibule.

## Patentansprüche

1. Schleuse (2) für den Zugang zu einem Kühlhaus, wobei die Schleuse eine Türöffnung (22) definiert und aufweist: einen Rahmen (4, 6, 8) für das Stützen der inneren und äußeren beweglichen Türformgebungselemente (10, 12); eine Einrichtung (20) für das Zirkulieren von Luft zwischen den inneren und äußeren beweglichen Türformgebungselementen; und eine Einrichtung (20) für das Verändern des Luftstromes zwischen den Elementen, wobei die Einrichtung (20) für das Verändern des Luftstromes zwischen den Elementen aufweist: (i) ein regelbares Gebläse für das Zirkulieren von Luft zwischen den Türformgebungselementen (10, 12) oder (ii) ein Gebläse, das auf einer konstanten Drehzahl gehalten wird; und eine mechanische Drosselklappe, um den Luftstrom zu verändern, **dadurch gekennzeichnet, dass** die Einrichtung für das Verändern des Luftstromes zwischen den Elementen den Luftstrom beim Öffnen der Türformgebungselemente (10, 12) automatisch verstärkt und den Luftstrom beim Schließen der Türformgebungsalemente (10, 12) automatisch vermindert.

2. Schleuse nach Anspruch 1, die außerdem einen Heizkörper aufweist.

3. Schleuse nach Anspruch 1, bei der die Drehzahl des Gebläses (20) um 50 % bis 500 % beim Öffnen der Türformgebungselemente zunimmt.

4. Schleuse nach Anspruch 1, bei der die Drehzahl des Gebläses (20) um 50 % bis 150 % beim Öffnen der Türformgebungselemente zunimmt.

5. Schleuse nach einem der vorhergehenden Ansprüche, bei der eine Betätiguntgseinrichtung vorhanden ist, um den Türformgebungselementen eine Bewegung zu erteilen.

6. Schleuse nach einem der vorhergehenden Ansprüche, bei der die Türformgebungselemente (10, 12) in der Form von Streifenvorhängen vorliegen.

7. Schleuse nach Anspruch 6, bei der die Streifen auf einem mit einem Motor angetriebenen Ziehharmonikamechanismus hängend angeordnet sind.

8. Schleuse nach einem der vorhergehenden Ansprüche, bei der die Türformgebungselemente (10, 12) aus der Gruppe ausgewählt werden, die besteht aus:
einteiligen Schiebetüren; einteiligen Ziehharmonikatüren; zweiteiligen Schiebetüren;
einteiligen horizontal rollenden Türen; zweiteiligen horizontal rollenden Türen;
einteiligen Falttüren; zweiteiligen Falttüren; und drehbar gelagerten Türen.

9. Schleuse nach einem der vorhergehenden Ansprüche, bei der der Rahmen zwei im Wesentlichen parallele Seitenplatten (4, 6) aufweist, die mittels einer horizontalen oberen Platte (8) verbunden sind.

10. Schleuse nach einem der vorhergehenden Ansprüche, bei der die inneren und äußeren Türformgebungselemente durch einen Spalt von zwischen 250 bis 2500 mm getrennt sind.

11. Schleuse nach Anspruch 10, bei der die inneren und äußeren Türformgebungselemente durch einen Spalt von 750 mm getrennt sind.

12. Schleuse nach einem der Ansprüche 1 bis 11, bei der eine Luftaustrittseinrichtung (24) für das Aufnehmen von Luft vom Gebläse (20) und deren Ablassen über die Türöffnung vorhanden ist, und wobei eine Luftaufhahmeeinrichtung für das Aufnehmen der abgelassenen Luft vorhanden ist.

13. Schleuse nach Anspruch 12, bei der eine Luftleiteinrichtung für das Leiten von Luft von der Luflaufnahmeeinrichtung zur Luftaustrittseinrichtung vorhanden ist.

14. Schleuse nach Anspruch 13, bei der die Luftaufnahmeeinrichtung und die Luftleiteinrichtung eine Luftrückführeinrichtung aufweisen.

15. Schleuse nach Anspruch 14, wenn vom Anspruch 9 abhängig, bei der der Luftstrom nach unten von der Luftaustrittseinrichtung, die in der oberen Platte (8) vorhanden ist, zur Luftrückführeinrichtung gelenkt wird, die einen Eintritt (14) aufweist, der in unmittelbarer Nähe einer Basis von einer oder beiden der Seitenplatten (4, 6) vorhanden ist.

16. Schleuse nach Anspruch 14, wenn vom Anspruch 9 abhängig, bei der der Luftstrom horizontal zwischen den Seitenplatten (4, 6) gelenkt wird, wobei die Luftaustrittseinrichtung (24) in einer ersten Seitenplatte (6) und die Luftrückführeinrichtung in der gegenüberliegenden Seitenplatte vorhanden sind.

17. Schleuse nach Anspruch 16, bei der eine Ablenkvorrichtung (25, 26) für das Lenken des Luftstromes von der Luftaustrittseinrichtung (24) vorhanden ist.

18. Schleuse nach Anspruch 17, bei der die Ablenkvorrichtung mindestens eine Schaufel (25, 26) aufweist, die im Allgemeinen in Längsrichtung entlang der ersten Seitenplatte (6) für das Lenken der aus einer Öffnung (24) in der Platte abgelassenen Luft zu einem Eintritt verläuft, der in der gegenüberliegenden Seitenplatte vorhanden ist.

19. Schleuse nach Anspruch 18, bei der die mindestens eine Schaufel (25, 26) die Luft in eine einzige Richtung lenkt.

20. Schleuse nach Anspruch 18, bei der die mindestens eine Schaufel (25, 26) die Luft in eine Anzahl von unterschiedlichen Richtungen lenkt, was von der Position der Schaufel mit Bezugnahme auf das Seitenelement (6) abhängig ist.

21. Schleuse nach einem der Ansprüche 17 bis 20, bei der die Ablenkvorrichtung in einer ersten Ausrichtung positioniert werden kann, wenn die Türformgebungselemente (10, 12) geschlossen sind, und sich in eine zweite Ausrichtung einstellt, wenn die Türformgebungselemente offen sind.

22. Schleuse nach einem der Ansprüche 12 bis 16, bei der die Luftaustrittseinrichtung die Richtung des Luftstromes darauf basierend ändern kann, ob sich die Turformgebungselemente in der offenen oder geschlossenen Position befinden oder nicht.

23. Schleuse nach einem der vorhergehenden Ansprüche, die außerdem eine Entfeuchtungsanlage aufweist.

24. Schleuse nach einem der vorhergehenden Ansprüche, die außerdem eine zusätzliche Sicherheitstür für das Abdichten der Schleuse aufweist.

## Revendications

1. Sas (2) pour une entrée de porte dans un entrepôt frigorifique, le sas définissant une ouverture d'entrée de porte (22) comprenant un cadre (4, 6, 8) pour supporter des éléments internes et externes mobiles formant la porte (10, 12), un moyen (20) pour faire circuler l'air entre lesdits éléments internes et externes mobiles formant la porte (20), afin de varier l'écoulement d'air entre lesdits éléments, le moyen (20) destiné à varier l'écoulement d'air entre lesdits éléments comprenant (i) un ventilateur à vitesse variable pour faire circuler l'air entre lesdits éléments formant la porte (10, 12), ou (ii) un ventilateur maintenu à une vitesse constante et un registre mécanique pour varier l'écoulement d'air, **caractérisé en ce que** le moyen destiné à varier l'écoulement d'air entre lesdits éléments accroît automatiquement l'écoulement d'air lors de l'ouverture des éléments formant la porte (10, 12) et réduit automatiquement l'écoulement d'air lors de la fermeture des éléments formant la porte (10, 12).

2. Sas selon la revendication 1, comprenant en outre un dispositif de chauffage.

3. Sas selon la revendication 1, dans lequel la vitesse du ventilateur (20) est accrue de 50% à 500% lors de l'ouverture des éléments formant la porte.

4. Sas selon la revendication 1, dans lequel la vitesse du ventilateur (20) est accrue de 50% à 150% lors de l'ouverture des éléments formant la porte.

5. Sas selon l'une quelconque des revendications précédentes, dans lequel le moyen d'actionnement sert à entraîner un déplacement des éléments formant la porte.

6. Sas selon l'une quelconque des revendications précédentes, dans lequel les éléments formant la porte (10, 12) ont la forme de rideaux à lanières.

7. Sas selon la revendication 6, dans lequel les lanières sont suspendues sur un mécanisme en accordéon motorisé.

8. Sas selon l'une quelconque des revendications précédentes, dans lequel les éléments formant la porte (10, 12) sont sélectionnés dans le groupe constitué par des portes coulissantes individuelles, des portes pliantes individuelles, des portes coulissantes à deux vantaux, des portes à roulement horizontal individuelles, des portes à roulement horizontal à deux vantaux, des portes pliantes individuelles, des portes pliantes à deux vantaux et des portes à montage sur charnière.

9. Sas selon l'une quelconque des revendications précédentes, dans lequel le cadre comprend deux panneaux latéraux pratiquement parallèles (4, 6) connectés par l'intermédiaire d'un panneau supérieur horizontal (8).

10. Sas selon l'une quelconque des revendications précédentes, dans lequel les éléments internes et externes formant la porte sont séparés par un espace compris entre 250 et 2500 mm.

11. Sas selon la revendication 10, dans lequel les éléments internes et externes formant la porte sont séparés par un espace de 750 mm.

12. Sas selon l'une quelconque des revendications 1 à 11, dans lequel un moyen d'évacuation de l'air (24) est prévu pour recevoir l'air provenant du ventilateur (20) et pour l'évacuer à travers l'entrée de porte, un moyen de réception de l'air étant prévu pour recevoir l'air évacué.

13. Sas selon la revendication 12, dans lequel un moyen conducteur de l'air est prévu pour conduire l'air du moyen de réception vers le moyen d'évacuation.

14. Sas selon la revendication 13, dans lequel le moyen de réception de l'air et le moyen conducteur de l'air comprennent un moyen de retour d'air.

15. Sas selon la revendication 14, dépendant de la revendication 9, dans lequel l'écoulement d'air est dirigé vers le bas à partir du moyen d'évacuation de l'air, agencé dans le panneau supérieur (8), vers le moyen de retour d'air, comprenant une entrée (14) agencée près d'une base de l'un ou des deux panneaux latéraux (4, 6).

16. Sas selon la revendication 14, dépendant de la revendication 9, dans lequel l'écoulement de l'air est dirigé horizontalement entre les panneaux latéraux (4, 6), le moyen d'évacuation de l'air (24) étant agencé dans un premier panneau latéral (6) et le moyen de retour d'air étant agencé dans le panneau latéral opposé.

17. Sas selon la revendication 16, dans lequel un déflecteur (25, 26) est prévu pour diriger l'écoulement d'air à partir du moyen d'évacuation de l'air (24).

18. Sas selon la revendication 17, dans lequel le déflecteur comprend au moins une lame (25, 26), s'étendant en général dans le sens de la longueur le long du premier panneau latéral (6), pour diriger l'air évacué à partir d'une ouverture (24) dans ledit panneau vers une entrée agencée dans le panneau latéral opposé.

19. Sas selon la revendication 18, dans lequel la au moins une lame (25, 26) dirige l'air dans une seule direction.

20. Sas selon la revendication 18, dans lequel la au moins une lame (25, 26) dirige l'air dans plusieurs directions différentes, en fonction de la position de la lame par rapport à l'élément latéral (6).

21. Sas selon l'une quelconque des revendications 17 à 20, dans lequel le déflecteur peut être positionné dans une première orientation lorsque les éléments formant la porte (10, 12) sont fermés et est ajusté vers une deuxième orientation lorsque les éléments formant la porte sont ouverts.

22. Sas selon l'une quelconque des revendications 12 à 16, dans lequel le moyen d'évacuation de l'air peut changer la direction de l'écoulement d'air selon que les éléments formant la porte se trouvent dans la position ouverte ou dans la position fermée.

23. Sas selon l'une quelconque des revendications précédentes, comprenant en outre une unité de déshumidification.

24. Sas selon l'une quelconque des revendications précédentes, comprenant en outre une porte de sécurité additionnelle pour établir l'étanchéité du sas.
